(19) **Europäisches Patentamt**

**European Patent Office**

**Office européen des brevets**

(11) Veröffentlichungsnummer : **0 615 152 B1**

(12)

# EUROPÄISCHE PATENTSCHRIFT

(45) Veröffentlichungstag der Patentschrift :
**15.11.95 Patentblatt 95/46**

(51) Int. Cl.$^6$ : **G02F 1/35, C09K 19/40**

(21) Anmeldenummer : **94103681.6**

(22) Anmeldetag : **10.03.94**

(54) **Verfahren zur Herstellung von Materialien mit guten nichtlinearen optischen Eigenschaften.**

(30) Priorität : **11.03.93 DE 4307769**

(43) Veröffentlichungstag der Anmeldung :
**14.09.94 Patentblatt 94/37**

(45) Bekanntmachung des Hinweises auf die
Patenterteilung :
**15.11.95 Patentblatt 95/46**

(84) Benannte Vertragsstaaten :
**CH DE FR GB IT LI**

(56) Entgegenhaltungen :
**EP-A- 0 238 789**
**EP-A- 0 431 466**
**EP-A- 0 567 378**
**WO-A-91/03002**
**US-A- 5 138 010**
**ADVANCED MATERIALS, Bd. 5; Nr. 7-8, August 1993, Germany, Seiten 556-559; H. ANNESER et al.: "Photoinduced Generation of Noncentrosymmetric Structures in Glassy Liquid Crystalline Polysiloxanes for Second Harmonic Generation"**

(73) Patentinhaber : **Consortium für elektrochemische Industrie GmbH Zielstattstrasse 20 D-81379 München (DE)**

(72) Erfinder : **Bräuchle, Christoph, Prof.Dr. Rotkäppchenstrasse 89a D-81739 München (DE)**
Erfinder : **Petri, Andreas Thalkirchner Strasse 74 D-80337 München (DE)**
Erfinder : **Anneser, Hans Neureutherstrasse 2 D-80799 München (DE)**
Erfinder : **Feiner, Franz Weddigenstrasse 10 D-81737 München (DE)**
Erfinder : **Boldt, Peter, Prof.Dr. Zeppelinstrasse 3 D-38106 Braunschweig (DE)**
Erfinder : **Weitzel, Hans-Peter, Dr. Sonnenstrasse 8 D-84571 Reuschach (DE)**

**Beschreibung**

Die Erfindung betrifft Verfahren zur Herstellung von Materialien mit guten und strukturierbaren und mikrostrukturierbaren nichtlinearen optischen Eigenschaften sowie die Verwendung dieser Materialien.

Nichtlineare optische Materialien finden Anwendung in der Mikroelektronik (optische Schalter, integrierte Schaltkreise, Frequenzverdopplung und -verdreifachung). Sie werden benötigt zur Frequenzverdopplung, da wenige leistungsstarke Laser im sichtbaren und vor allem im ultravioletten Spektralbereich zur Verfügung stehen. Zum Beispiel erhält man durch Frequenzverdoppelung des häufig anzutreffenden Nd/YAG-Lasers ($\lambda$ = 1064 nm) einen Lichtstrahl im grünen Spektralbereich (532 nm).

Gängige Materialien für die Frequenzverdopplung sind bislang anorganische Materialien wie Kaliumdihydrogenphosphat (KDP), Harnstoff oder $LiNbO_3$. Diese Materialien besitzen nur geringe molekulare Hyperpolarisierbarkeiten $\beta$. Hohe Hyperpolarisierbarkeiten $\beta$ sind aber molekulare Voraussetzung für die Erzeugung von frequenzverdoppeltem Licht. Die Erzeugung von frequenzverdoppeltem Licht bezeichnet man auch als second harmonic generation oder SHG. Die Qualität des zur Frequenzverdopplung eingesetzten Materials ergibt sich aus der Größe des SHG-Signals. Weitere Erläuterungen zur Theorie der nichtlinearen Optik finden sich beispielsweise in K. D. Singer, Electroresponsive Mol. Polym. Syst.,(1991), 2, 49-112.

In makroskopischen Proben kann die zur molekularen Hyperpolarisierbarkeit $\beta$ korrespondierende Größe, die Suszeptibilität $\chi^{(2)}$, gemessen werden. Die Größe dieser Suszeptibilität geht empfindlich in die Umwandlungseffizienz $\eta$ des Laserlichts in die zweite harmonische Welle ein (Gleichungen 1-3).

$$\eta \ = \ P(2\omega)/P(\omega) \quad (1)$$
$$P(2\omega) \ = \ (2\omega^2\chi^{(2)2}l^2)/(\pi\varepsilon_o c^3 n_\omega{}^2 n_{2\omega}{}^2 w_o{}^2) * P^2(\omega) * S \quad (2)$$
$$\chi^{(2)} = NFD\beta \quad (3)$$

$\eta$ = Umwandlungseffizienz
$P(i\omega)$ = Leistung der i-ten harmonischen Welle
$\chi^{(2)}$ = Suszeptibilität zweiter Ordnung
$n_{i\omega}$ = Brechungsindex der i-ten harmonischen Welle
$w_o$ = Strahldurchmesser
$l$ = Probendicke
$S$ = Phasenanpassungsfaktor
$N$ = Moleküldichte
$F$ = Feldfaktor
$D$ = Orientierungsfaktor
$\beta$ = molekulare Hyperpolarisierbarkeit

Weiterer wichtiger Faktor für die Umwandlungseffizienz $\eta$ ist der Orientierungsparameter D der Moleküle. Der Orientierungsparameter D hängt von der Güte der Polung ab. Je besser die Polung erfolgt, um so größer ist der Orientierungsparameter D (maximal 1). Unter Polung versteht man die Ausrichtung der asymmetrischen Moleküle derart, daß alle Dipole in die gleiche Richtung zeigen und insgesamt eine nichtzentrosymmetrische Struktur resultiert.

In anorganischen Materialien wie KDP findet man nur eine geringe molekulare Hyperpolarisierbarkeit $\beta$, man kann aber von diesen Verbindungen Einkristalle mit hoher Ordnung (großem Orientierungsfaktor D) und großem $\chi^{(2)}$ erhalten.

Organische Materialien mit großer molekularer Hyperpolarisierbarkeit $\beta$ sind beispielsweise aus D.M. Burland, SPIE (1991), 1560, 111-119 bekannt. Bisher ist es jedoch nicht gelungen, bei diesen Materialien zumindest über mehrere Monate einen guten Orientierungsgrad zu erhalten.

Es ist aus H. Man, Adv. Mater., (1992), 159-168, bekannt mit nichtlinearen optischen Molekülen dotierte Polymere durch starke elektrische Felder oder Coronapolung bei Temperaturen oberhalb der Glastemperatur (Tg) der Polymere zu polen. Nachteilhaft ist, daß diese Orientierung bei Entfernen der elektrischen Felder kontinuierlich verloren geht. Ein weiterer Nachteil dieser Methode ist, daß bei den hohen Temperaturen oberhalb Tg gepolt werden muß. Ein weiterer Nachteil ist, daß die hier beschriebene Methode in einfacher Weise ausschließlich die großflächige Polung des gesamten Elements erlaubt. Eine Darstellung von strukturierbaren und mikrostrukturierbaren Elementen ist nicht möglich.

Ein weiteres Verfahren (Z. Sekkat, M. Dumont, Appl. Phys. B, 54, 486-489, (1992)) benutzt zur Polung den Effekt, daß sich die NLO-Chromophore, eingemischt in eine isotrope Matrix, nach Anlegen eines Gleichspannungsfeldes durch Bestrahlung mit zirkular polarisiertem Licht mit ihrer Längsachse in Strahlrichtung polen lassen. Die nach diesem Verfahren erhaltenen Proben -NLO-Chromophore in PMMA als nichtflüssigkristallinem Medium- zeigen gute SHG-Signale, die aber nur eine geringe Stabilität besitzen. Nach Entfernen des elektrischen Feldes fällt das SHG-Signal durch Relaxation der Moleküle in der isotropen Matrix nach wenigen Sekunden auf einen geringen Restwert zurück.

Die Erfindung betrifft Verfahren zur Herstellung von Materialien und Strukturierten Proben mit guten nichtlinearen optischen Eigenschaften gemäß den Ansprüchen 1 und 7. Hierbei werden Materialien mit flüssigkristalliner Matrix unterhalb ihrer Glastemperatur gleichzeitig einem elektrischen Feld und unpolarisiertem und/oder zirkular polarisiertem Licht ausgesetzt.

Überraschenderweise wurde gefunden, daß durch gleichzeitiges Bestrahlen mit zirkular polarisiertem und/oder unpolarisiertem Licht und Anlegen eines elektrischen Feldes an Materialien mit flüssigkristalliner Matrix unterhalb Tg Proben mit großen SHG-Signalen, die auch nach Abschalten der Lichtquelle und des elektrischen Feldes stabil bleiben, erhalten werden.

Das erfindungsgemäße Verfahren ermöglicht die Polung unterhalb der Glastemperatur der Probe, was zum einen materialschonender ist und zum anderen Proben mit geringer streuenden Texturen und somit besserer optischer Qualität liefert. Das Licht wird nach dem erfindungsgemäßen Verfahren ähnlich effizient frequenzverdoppelt wie bei der reinen Feldpolung, ohne daß die mit der Feldpolung verbundenen Nachteile auftreten.

Für das erfindungsgemäße Verfahren geeignete Materialien müssen eine flüssigkristalline Matrix besitzen. Die flüssigkristalline Matrix stabilisiert die gepolte Struktur erstaunlicherweise ungleich besser als isotrope bzw. amorphe Materialien. Es handelt sich bei den erfindungsgemäß geeigneten Materialien um Polymere wie beispielsweise Polymethacrylate, Polyacrylate, Polysiloxane, Polyvinylverbindungen, Polyether, Polyester, mit flüssigkristalliner Phase z.B. nematischer, smektischer, oder cholesterischer Phase. Zum Aufbau der flüssigkristallinen Phasen in diesen Polymeren dienen mesogene Verbindungen wie sie beispielsweise aus US-A-4,388,453 bekannt sind. Die dort offenbarten mesogenen Reste zählen zum Offenbarungsgehalt dieser Anmeldung.

Die Materialien müssen folgende Eigenschaften haben:

a) Sie müssen mindestens eine durch geeignetes Licht anregbare chromophore Gruppe besitzen, die durch photophysikalische Vorgänge, z.B. cis-trans-Isomerisierung eine Umorientierung der flüssigkristallinen Matrix in eine homöotrope Textur ermöglicht.

b) Sie müssen mindestens eine chromophore Gruppe mit einer hohen molekularen Hyperpolarisierbarkeit $\beta$ besitzen.

c) Sie müssen einen Glaspunkt oberhalb der Raumtemperatur (20°C), bevorzugt oberhalb 50°C, besitzen.

Die chromophore Gruppe zur Isomerisierung und diejenige mit einer hohen molekularen Hyperpolarisierbarkeit können in einem Molekül inkorporiert sein, sie können aber ebenso in verschiedenen Molekülen - unabhängig voneinander - vorhanden sein. Die chromophoren Gruppen können, müssen aber nicht, kovalent an das Polymer angebunden sein.

Die Herstellung geeigneter Materialien ist beispielsweise in R. Ortler, Makromol. Chem., Rapid Commun. 10, 189-194 (1989) oder in US-A-4410570 beschrieben.

Bevorzugt geeignet sind Polysiloxane wie beispielsweise mit flüssigkristallinen Gruppen substituierte Polyalkylsiloxane z.B. Polymethylsiloxane.

Besonders bevorzugt geeignet sind cyclische Polysiloxane mit cholesterischen Eigenschaften, insbesondere solche mit mesogenen Gruppen, die cholesterische, photoreaktive und NLO-aktive Eigenschaften besitzen und Glaspunkte zwischen 50 und 60°C sowie Klärpunkte zwischen 180 und 200°C besitzen, wobei cyclische Polysiloxane, die 4-Amino-4'-Nitroazobenzol oder 4-Amino-4'-Cyanoazobenzol als nichtlineare optische Gruppen enthalten, nochmals bevorzugt sind.

Die genannten Materialien werden nach gängigen Verfahren der Display Technologie, wie sie beispielsweise bei H. Man, Adv. Mater., (1992), 159-168, beschrieben sind, bei einer Temperatur zwischen Glaspunkt und Klärpunkt durch Kapillarkräfte in eine ITO (ITO = Indium-Zinn-Oxide) beschichtete Zelle gefüllt. Durch Tempern vorzugsweise bei 140°C bis 160°C für 1 bis 3 h entsteht eine optisch klare Phase, in der die Helixachse senkrecht zur Glasoberfläche steht. Die Längsachse der Moleküle ist parallel zu den Glasplatten orientiert.

Nach einem anderen bekannten Verfahren wird eine dünne Schicht des Ausgangsmaterials durch spincoaten beispielsweise auf einer Glasplatte hergestellt. Dazu wird das Material als verdünnte Lösung auf eine ITO beschichtete Glasplatte aufgetragen und auf einem heizbaren Drehteller solange rotiert bis das Lösungsmittel abgedampft ist. Anschließend wird, wie beschrieben, durch Tempern eine optisch klare Phase erzeugt.

Erfindungsgemäß wird nach Abkühlen des Materials auf eine Temperatur unterhalb der Glastemperatur das Ausgangsmaterial mit unpolarisiertem Licht und/oder mit zirkular polarisiertem Licht bestrahlt. Als Lichtquelle für unpolarisiertes Licht sind alle bekannten Lichtquellen, die solches Licht erzeugen, geeignet. Vorzugsweise ist eine Quecksilber-Xenon Lampe geeignet. Als Lichtquelle für zirkular polarisiertes Licht sind alle bekannten Lichtquellen, die solches Licht erzeugen, geeignet. Geeignet sind vorzugsweise Laser, beispielsweise ein Kr[+] Ionenlaser.

Die Bestrahlung erfolgt bevorzugt mit einer Intensität von 10 bis 1000mW/cm[2] besonders bevorzugt mit einer Intensität von 150 bis 300mW/cm[2] über einen von der Bestrahlungsstärke abhängigen Zeitraum vorzugsweise bis zu 5 Tagen.

Die Bestrahlung erfolgt senkrecht zur Probenoberfläche. Die Wellenlänge des Bestrahlungslichtes muß so gewählt sein, daß eine Anregung der photochromen Verbindung durch das Bestrahlungslicht möglich ist.

Während der Bestrahlung mit unpolarisiertem und/oder zirkular polarisiertem Licht wird erfindungsgemäß zusätzlich ein elektrisches Feld an die Proben angelegt. Das elektrische Feld ist parallel zum Licht orientiert. Das elektrische Feld sollte bevorzugt eine Stärke von 1 bis 100 V/$\mu$m, besonders bevorzugt von 10 bis 50 V/$\mu$m aufweisen.

Die Langzeitstabilität der Orientierung der erfindungsgemäß orientierten Materialien bei Raumtemperatur nach Abschalten von Bestrahlungslicht und elektrischem Feld konnte durch Verfolgung des SHG-Signals überprüft werden. Die Proben zeigten nur einen durch Relaxation bedingten geringen Abfall des SHG-Signals direkt nach der Polung auf etwa 70% des Ausgangswertes. Danach erfolgte keine weitere Abnahme des SHG-Signals, so daß Relaxationsprozesse auch über längere Zeiträume keine Rolle spielen. Weder Bestrahlung mit unpolarisiertem oder zirkular polarisiertem Licht allein noch Anlegen eines elektrischen Feldes allein bewirken unterhalb Tg eine Polung.

Bei Erwärmung der orientierten Proben über die Glastemperatur, wird die Orientierung der Probe wieder aufgehoben und man findet kein SHG-Signal mehr. Dieser Prozeß kann zum reversiblen Ein- und Ausschalten des SHG-Signals genutzt werden.

Durch die gleichzeitige Anwendung von zirkular polarisiertem und/oder unpolarisiertem Licht und elektrischem Feld eröffnet sich die Möglichkeit zur Darstellung von strukturierten Proben.

In einfacher Weise lassen sich strukturierte Proben dadurch herstellen, daß die Probe unterhalb der Glastemperatur der Materialien mit flüssigkristalliner Matrix gleichzeitig einem elektrischen Feld und einer strukturierten Bestrahlung durch unpolarisiertes und/oder zirkular polarisiertes Licht ausgesetzt werden. Vorzugsweise werden die Proben dadurch hergestellt, daß während der Belichtung mindestens eine Maske auf die Probe aufgelegt wird. Dadurch erfolgt nur an den belichteten Stellen eine Polung. Weitere ortsabhängige Bestrahlungstechniken wie z.B. Laser-Scanning sind für diesen Prozeß ebenfalls möglich.

Die maximal erreichbare Auflösung bei Strukturierungen wird durch die Wellenlänge des verwendeten Lichts bestimmt.

Strukturierte Proben lassen sich durch zwei Varianten des erfindungsgemäßen Verfahrens herstellen:

1. Das elektrische Feld wird vollflächig angelegt und es wird nur an bestimmten Stellen bestrahlt. Bei diesem Vorgehen bildet sich an den belichteten Stellen eine homöotrope Textur mit gepolten NLO-Chromophoren. An den unbelichteten Stellen bleibt die ursprüngliche flüssigkristalline Textur erhalten.

2. Die Bestrahlung erfolgt vollflächig und es wird nur an bestimmten Stellen das elektrische Feld angelegt. Bei diesem Vorgehen bildet sich an den Stellen ein homöotrope Textur mit gepolten NLO-Chromophoren. An den spannungsfreien Stellen bildet sich eine homöotrope aber ungepolte Textur.

Die erfindungsgemäßen Verfahren ermöglichen somit auch die Herstellung von strukturierten Wellenleitern und optischen Schaltelementen mit guten nichtlinearen Eigenschaften.

Fig. 1 zeigt das winkelabhängige SHG-Signal für die in den Beispielen beschriebenen Reorientierungsmethoden. [w.E.] bedeutet willkürliche Einheiten.

Fig. 2 zeigt den zeitlichen Verlauf der SHG-Intensität der Probe aus Beispiel 8.

Zur weiteren Erläuterung der Erfindung dienen die folgenden Beispiele:

Beispiel 1

Darstellung von 4-(N-Propenyl-2, N-ethyl)amino-4'-nitro-azobenzol

a) Darstellung von N-Ethyl-N-allyl-anilin

Zu 0,2 mol N-Ethyl-anilin werden vorsichtig 0,2 mol des Brom-1-propens zugetropft und die Lösung anschließend für 20 h bei 100°C erhitzt. Nach Abkühlen versetzt man die erstarrte Reaktionsmasse mit 200 ml Wasser und setzt unter starken Rühren soviel festes Kaliumhydroxid zu, bis die Lösung alkalisch bleibt. Die organische Phase wird abgetrennt, über Natriumsulfat getrocknet und im Vakuum fraktioniert destilliert.

b) Diazotierung

Eine Suspension aus 30 mmol 4-Nitro-anilin, 10 ml konz. Salzsäure und 25 ml Wasser wird bei 0-5°C auf einmal mit einer Lösung aus 3,15 g (45 mmol) Natriumnitrit in 10 ml Wasser versetzt. Die Zugabe der Natriumnitrit-Lösung erfolgt unter die Oberfläche der Suspension, wobei die Temperatur kurzzeitig auf 15°C ansteigen kann. Anschließend wird 1 h bei 0-5°C gerührt und die erhaltene Diazoniumsalz-Lösung abfiltriert.

c) Kupplung

Die hergestellte Diazoniumchlorid-Lösung wird portionsweise zu einer auf 0-5°C gekühlten Lösung aus 30 mmol N-Ethyl-N-allyl-anilin, 21 g Natriumacetat, 17 ml Eisessig und 200 ml Wasser gegeben, so daß der angegebene Temperaturbereich nicht überschritten wird. Anschließend wird die entstehende Suspension für weitere 2-3 h gerührt, der ausgefallene Feststoff abgesaugt und getrocknet. Die Reinigung des erhaltenen Rohprodukts erfolgt durch Umkristallisation aus Ethanol. Nach Umkristallisation aus Ethanol erhält man 5,1 g (55%) dunkelrote Blättchen vom Schmelzpunkt 108-110°C.

Beispiel 2

Darstellung von 4-(N-Pentenyl-4, N-ethyl)amino-4'-cyanoazobenzol

a) Darstellung von N-Ethyl-N-pentenyl-anilin

Zu 0,2 mol N-Ethyl-anilin werden vorsichtig 0,2 mol des Brom-1-pentens zugetropft und die Lösung anschließend für 20 h bei 100°C erhitzt. Nach Abkühlen versetzt man die erstarrte Reaktionsmasse mit 200 ml Wasser und setzt unter starken Rühren soviel festes Kaliumhydroxid zu, bis die Lösung alkalisch bleibt. Die organische Phase wird abgetrennt, über Natriumsulfat getrocknet und im Vakuum fraktioniert destilliert.

b) Diazotierung

Eine Suspension aus 30 mmol 4-Aminobenzonitril, 10 ml konz. Salzsäure und 25 ml Wasser wird bei 0-5°C auf einmal mit einer Lösung aus 3,15 g (45 mmol) Natriumnitrit in 10 ml Wasser versetzt. Die Zugabe der Natriumnitrit-Lösung erfolgt unter die Oberfläche der Suspension, wobei die Temperatur kurzzeitig auf 15°C ansteigen kann. Anschließend wird 1 h bei 0-5°C gerührt und die erhaltene Diazoniumsalz-Lösung abfiltriert.

c) Kupplung

Die hergestellte Diazoniumchlorid-Lösung wird portionsweise zu einer auf 0-5°C gekühlten Lösung aus 30 mmol N-Ethyl-N-pentyl-anilin, 21 g Natriumacetat, 17 ml Eisessig und 200 ml Wasser gegeben, so daß der angegebene Temperaturbereich nicht überschritten wird. Anschließend wird die entstehende Suspension für weitere 2-3 h gerührt, der ausgefallene Feststoff abgesaugt und getrocknet. Die Reinigung des erhaltenen Rohprodukts erfolgt durch Umkristallisation aus Petrolether. Nach Umkristallisation erhält man 4,7 g (49%) orange Kristalle vom Schmelzpunkt 63-64°C.

Beispiel 3

Darstellung der Flüssigkristalle mit 4-(N-Propenyl-2, N-ethyl)amino-4'-nitroazobenzol

0.97 g (4.03 mmol) Tetramethylcyclotetrasiloxan, 2,40 g (7.25 mmol) 4-(Propen-2-oxy)benzoesäure-4'-phenylester, 3.98 g (7.25 mmol) 4-(Propen-2-oxy)benzoesäurecholestanylester (die Herstellung dieser Substanzen ist in US-A-4410570 beschrieben) und 0.50 g (1.61 mmol) 4-(N-Propenyl-2, N-ethyl)amino-4'-nitroazobenzol werden in 20 ml trockenem Toluol gelöst und nach Zugabe von 0.08 ml einer Lösung von Dicyclopentadienplatindichlorid (1 Gew.% in Methylenchlorid) 1 h auf 100°C erwärmt. Nach beendeter Reaktion wird der Katalysator über eine kurze, mit Kieselgel gefüllte Säule (l= 3 cm, Durchmesser = 3 cm) abgetrennt und das Produkt mehrfach in Ethanol ausgefällt bis der Restmonomergehalt unter 1% beträgt. Das Endprodukt wird über einen 0.2 μm-Filter filtriert und im Vakuum bei 90°C getrocknet. Man erhält 2,5 g (32%) einer Substanz mit einer Reflexionswellenlänge bei 1176 nm. Die Substanz besitzt einen Glaspunkt bei 59°C und einen Klärpunkt bei 180°C.

Beispiel 4

Orientierung und Polung der Probe mit zirkular polarisiertem Licht und elektrischem Feld unter Tg

Das flüssigkristalline Polysiloxan gemäß Beispiel 3 wird bei 140°C durch Kapillarkräfte in eine ITO-beschichtete, kommerziell erhältliche Zelle (d=5μm) (E.H.C. CO., LTD., Tokyo) gefüllt. Durch Tempern (160°C; 60 min) entsteht eine optisch klare Phase, in der die Helixachse senkrecht auf der Glasoberfläche steht. Die Längsachse der Moleküle ist parallel zu den Glasplatten orientiert. Durch Bestrahlung der Probe mit zirkular polarisiertem Licht eines Kr$^+$-Ionenlasers (482nm, 200mW/cm$^2$) bei 53°C (T<Tg) wird die Probe homöotrop ausgerichtet und durch gleichzeitiges Anlegen eines elektrischen Feldes (5V/μm) gepolt. Das zirkular polarisierte Licht und das elektrische Feld werden abgeschaltet.

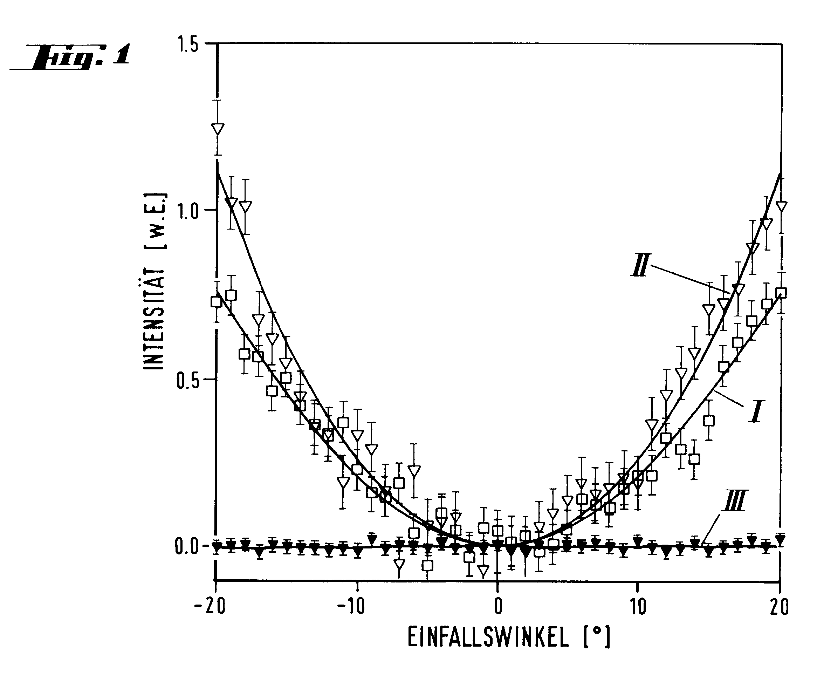

Zur Untersuchung der Polung wird mit einem Nd/YAG-Laser (1064nm) frequenzverdoppeltes Licht erzeugt und mit Hilfe der Maker-Interferenzmethode (P.D. Maker, Phys. Rev. Lett. 8, 21 (1962)) die winkelabhängige Intensität des frequenzverdoppelten Lichts detektiert (Fig.1.II). Die Messung ergibt ein SHG-Signal von 1.2 (willkürliche Einheiten).

Vergleichsbeispiel 1

Orientierung und Polung der Probe mit elektrischen Feldern über Tg

Das flüssigkristalline Polysiloxan gemäß Beispiel 3 wird bei 140°C durch Kapillarkräfte in eine ITO-beschichtete, kommerziell erhältliche Zelle (d=5μm) (E.H.C. CO., LTD., Tokyo) gefüllt. Durch Tempern (160°C/60 min) entsteht eine optisch klare Phase, in der die Helixachse senkrecht auf der Glasoberfläche steht. Die Längsachse der Moleküle ist parallel zu den Glasplatten orientiert. Durch Erwärmen auf 100°C (T>Tg) und Anlegen eines elektrischen Feldes (21V/μm) wird die Probe gepolt. Die Probe wird abgekühlt, dann wird das elektrische Feld abgeschaltet.

Zur Untersuchung der Polung wird durch Bestrahlen der Probe mit Hilfe eines Nd/YAG-Lasers (1064 nm) frequenzverdoppeltes Licht erzeugt. Mit Hilfe der Maker-Interferenzmethode wird die winkelabhängige Intensität des frequenzverdoppelten Lichts detektiert (Abb. 1.I). Die Messung ergibt ein SHG-Signal von 0.75 (willkürliche Einheiten).

Vergleichsbeispiel 2

Orientierung und Polung der Probe mit elektrischen Feldern unterhalb Tg

Das flüssigkristalline Polysiloxan gemäß Beispiel 3 wird bei 140°C durch Kapillarkräfte in eine ITO-beschichtete, kommerziell erhältliche Zelle (d=5μm) (E.H.C. CO., LTD., Tokyo) gefüllt. Durch Tempern (160°C; 60 min) entsteht eine optisch klare Phase, in der die Helixachse senkrecht auf der Glasoberfläche steht. Die Längsachse der Moleküle ist parallel zu den Glasplatten orientiert. Durch Erwärmen auf 53°C (T<Tg) und Anlegen eines elektrischen Feldes (21V/μm) wird versucht, die Probe zu polen. Das elektrische Feld wird abgeschaltet.

Zur Untersuchung der Polung wird die Probe mit einem Nd/YAG-Laser (1064 nm) bestrahlt, um frequenzverdoppeltes Licht zu erzeugen und mit Hilfe der Maker-Interferenzmethode die winkelabhängige Intensität des frequenzverdoppelten Lichts zu detektieren. Es kann kein SHG-Signal gemessen werden, d.h. es erfolgt keine Polung der Probe durch elektrische Felder unterhalb Tg.

Vergleichsbeispiel 3

Orientierung und Versuch der Polung der Probe mit zirkular polarisiertem Licht

Das flüssigkristalline Polysiloxan gemäß Beispiel 3 wird bei 140°C durch Kapillarkräfte in eine ITO-beschichtete, kommerziell erhältliche Zelle (d=5μm) (E.H.C. CO., LTD., Tokyo) gefüllt. Durch Tempern (160°C; 60 min) entsteht eine optisch klare Phase, in der die Helixachse senkrecht auf der Glasoberfläche steht. Die Längsachse der Moleküle ist parallel zu den Glasplatten orientiert. Durch Erwärmen auf 53°C (T<Tg) und Bestrahlen mit zirkular polarisiertem Licht eines Kr$^+$-Ionenlasers (482nm, 200 mW/cm$^2$) wird versucht, die Probe zu polen. Die Lichtquelle wird abgeschaltet. Zur Untersuchung der Polung wird die Probe mit einem Nd/YAG-Laser (1064nm) bestrahlt, um frequenzverdoppeltes Licht zu erzeugen und mit Hilfe der Maker-Interferenzmethode die winkelabhängige Intensität des frequenzverdoppelten Lichts zu detektieren. Es kann bei diesem Versuch kein SHG-Signal gemessen werden (Abb.: 1.III), d.h. es erfolgt keine Polung der Probe durch Bestrahlung mit zirkular polarisiertem Licht eines Kr$^+$-Ionenlasers (482 nm, 200mW/cm$^2$); die Probe wird homöotrop ausgerichtet, der NLO-Chromophor bleibt aber zentrosymmetrisch.

Beispiel 5

Darstellung der Flüssigkristalle mit 4-(N-Pentenyl-4, N-ethyl)amino-4'-cyanoazobenzol

0.38g(1.57 mmol) Tetramethylcyclotetrasiloxan, 0.93 g (2.83 mmol) 4-(Propen-2-oxy)benzoesäure-4'-phenylphenylester, 1.55g (2.83 mmol)4-(Propen-2-oxy)benzoesäurecholesterylester und 0.20 g (0.63 mmol) 4-(N-Pentenyl-4, N-ethyl)amino-4'-cyanoazobenzol werden in 10 ml trockenem Toluol gelöst und nach Zugabe von 0.03 ml einer Lösung von Dicyclopentadienplatindichlorid (1 Gew.-% in Methylenchlorid) 1h auf 100°C erwärmt. Nach beendeter Reaktion wird der Katalysator über eine kurze, mit Kieselgel gefüllte Säule (l=3 cm, Durchmesser = 3cm) abgetrennt und das Produkt mehrfach in Ethanol ausgefällt bis der Restmonomergehalt unter 1% beträgt. Das Endprodukt wird über einen 0.2 μm-Filter filtriert und im Vakuum bei 90°C getrocknet. Man erhält 1.0 g (33%) einer Substanz mit einer Reflexionswellenlänge bei 600 nm. Die Substanz besitzt einen Glaspunkt bei 55°C und einen Klärpunkt bei 195°C.

Beispiel 6

Orientierung und Polung der Probe mit zirkular polarisiertem Licht und elektrischem Feld

Das flüssigkristalline Polysiloxan gemäß Beispiel 5 wird bei 140°C durch Kapillarkräfte in eine ITO-beschichtete, kommerziell erhältliche Zelle (d=5μm) (E.H.C. CO., LTD., Tokyo) gefüllt. Durch Tempern (160°C; 60 min) entsteht eine optisch klare Phase, in der die Helixachse senkrecht auf der Glasoberfläche steht. Die Längsachse der Moleküle ist parallel zu den Glasplatten orientiert. Durch Bestrahlung mit zirkular polarisiertem Licht eines Kr$^+$-Ionenlasers (482 nm, 200mW/cm$^2$) bei 53°C (T<Tg) wird die Probe homöotrop ausgerichtet und durch gleichzeitiges Anlegen eines elektrischen Feldes (21V/μm) gepolt. Das zirkular polarisierte Licht und das elektrische Feld werden abgeschaltet.

Zur Untersuchung der Polung wird mit einem Nd/YAG-Laser (1064 nm) frequenzverdoppeltes Licht erzeugt und mit Hilfe der Maker-Interferenzmethode die winkelabhängige Intensität des frequenzverdoppelten Lichts detektiert. Die Messung ergibt ein SHG-Signal von 0.15 (willkürliche Einheiten).

Beispiel 7

Darstellung der Flüssigkristalle mit 4-(N-Propenyl-2, N-ethyl)amino-4'-nitroazobenzol

1.94g (8.06 mmol) Tetramethylcyclotetrasiloxan, 5.06g (15.3 mmol) 4-(Propen-2-oxy)benzoesäure-4'-phenylphenylester, 8.38 g (15.3 mmol) 4-(Propen-2-oxy)benzoesäurecholestanylester und 0.50g (1.61 mmol 4-(N-Propenyl-2, N-ethyl)amino-4'-nitroazobenzol werden in 20 ml trockenem Toluol gelöst und nach Zugabe von 0.08 ml einer Lösung von Dicyclopentadienplatindichlorid (1 Gew.-% in Methylenchlorid) 1 h auf 100°C erwärmt. Nach beendeter Reaktion wird der Katalysator über eine kurze, mit Kieselgel gefüllte Säule (l=3 cm, Durchmesser = 3 cm) abgetrennt und das Produkt mehrfach in Ethanol ausgefällt bis der Restmonomergehalt unter 1% beträgt.

Das Endprodukt wird über einen 0.2 μm-Filter filtriert und im Vakuum bei 90°C getrocknet. Man erhält 7.8 g (49%) einer Substanz mit einer Reflexionswellenlänge bei 1234 nm. Die Substanz besitzt einen Glaspunkt bei 58°C und einen Klärpunkt bei 192°C.

Beispiel 8

Bestimmung der Langzeitstabilität der erfindungsgemäßen Materialien.

Das flüssigkristalline Polysiloxan gemäß Beispiel 7 wird bei 140°C durch Kapillarkräfte in eine ITO-beschichtete, kommerziell erhältliche Zelle (d=5μm) (E.H.C. CO., LTD., Tokyo) gefüllt. Durch Tempern (160°C; 60 min) entsteht eine optisch klare Phase, in der die Helixachse senkrecht auf der Glasoberfläche steht. Die Längsachse der Moleküle ist parallel zu den Glasplatten orientiert. Durch Bestrahlung der Probe mit zirkular polarisiertem Licht eines Kr$^+$-Ionenlasers (482nm, 200mW/cm$^2$) bei 53°C (T<Tg) wird die Probe homöotrop ausgerichtet und durch gleichzeitiges Anlegen eines elektrischen Feldes (5V/$\mu$m) gepolt. Das zirkular polarisierte Licht und das elektrische Feld werden abgeschaltet.

Zur Untersuchung der Polung der Probe wird mit einem Nd/YAG-Laser (1064nm) frequenzverdoppeltes Licht erzeugt und mit Hilfe der Maker-Interferenzmethode die winkelabhängige Intensität des frequenzverdoppelten Lichts detektiert. Die Messung ergibt ein SHG-Signal von 1.05 (willkürliche Einheiten).

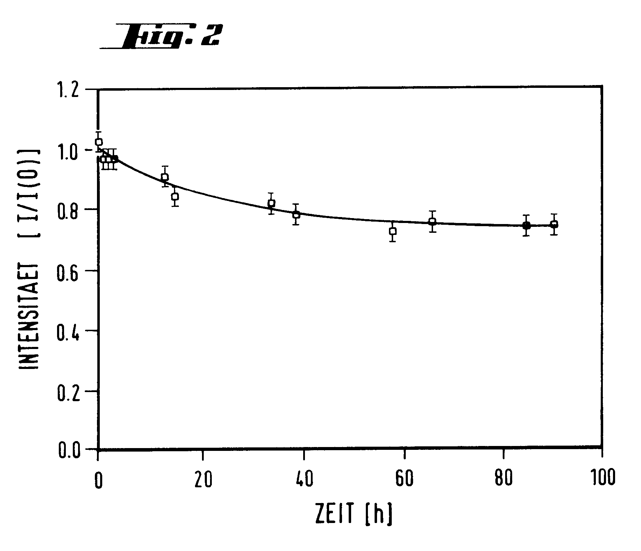

Die zeitliche Verfolgung des SHG-Signals zeigt eine Abnahme des Signals auf etwa 70% des Anfangswertes durch Relaxation innerhalb der ersten 50 Stunden (siehe Fig.2).

Anschließend bleibt das Signal stabil wie durch Messungen über 6 Wochen belegt werden konnte.

Beispiel 9

Herstellung einer strukturierbaren und mikrostrukturierbaren Probe

Das flüssigkristalline Polysiloxan gemäß Beispiel 3 wird bei 140°C durch Kapillarkräfte in eine ITO-beschichtete, kommerziell erhältliche Zelle (d=5$\mu$m) gefüllt. Durch Tempern entsteht eine optisch klare Phase, in der die Helixachse senkrecht auf der Glasoberfläche steht. Die Längsachse der Moleküle ist parallel zu den Glasplatten orientiert. Die Probe wird anschließend mit einer Lochmaske (d=2cm) abgedeckt. Durch Bestrahlung mit zirkular polarisiertem Licht eines Kr$^+$-Ionenlasers (482 nm, 200mW/cm$^2$) durch die Maske bei 53°C (T<Tg) wird die Probe im belichteten Bereich homöotrop ausgerichtet und durch gleichzeitiges Anlegen eines elektrischen Feldes (5V/$\mu$m) gepolt. Licht und elektrisches Feld werden anschließend abgestellt.

Zur Untersuchung der Polung wird mit einem Nd/YAG-Laser (1064 nm) frequenzverdoppeltes Licht erzeugt und mit Hilfe der Maker-Interferenzmethode die winkelabhängige Intensität des frequenzverdoppelten Lichts detektiert. Die Messung ergibt im belichteten Bereich ein SHG-Signal von 1.2 (willkürliche Einheiten), während in den Bereichen, die durch die Maske abgedeckt und somit nur dem Feld ausgesetzt waren, kein SHG-Signal gemessen werden kann.

**Patentansprüche**

1. Verfahren zur Herstellung eines Materials mit großer, stabiler, reversibler Suszeptibilität $\chi^{(2)}$, wobei ein Material mit flüssigkristalliner Matrix und einem Glaspunkt oberhalb der Raumtemperatur, welches mindestens eine durch geeignetes Licht anregbare chromophore Gruppe besitzt, die durch photophysikalische Vorgänge eine Umorientierung der flüssigkristallinen Matrix in eine homöotrope Textur ermöglicht sowie mindestens eine chromophore Gruppe mit einer hohen molekularen Hyperpolarisierbarkeit besitzt unterhalb ihrer Glastemperatur gleichzeitig einem elektrischen Feld und unpolarisiertem und/oder zirkular polarisiertem Licht ausgesetzt wird.

2. Verfahren nach Anspruch 1, dadurch gekennzeichnet, daß als Materialien mit flüssigkristalliner Matrix cyclische Polysiloxane eingesetzt werden.

3. Verfahren nach Anspruch 2, dadurch gekennzeichnet, daß als Materialien mit flüssigkristalliner Matrix cyclische Polysiloxane mit cholesterischen Eigenschaften eingesetzt werden.

4. Verfahren nach einem oder mehreren der Ansprüche 1 bis 3, dadurch gekennzeichnet, daß als Materialien mit flüssigkristalliner Matrix cyclische Polysiloxane, die 4-Amino-4'-Nitroazobenzol oder 4-Amino-4'-Cyanoazobenzol als nichtlineare optische Gruppen enthalten, eingesetzt werden.

5. Verfahren nach einem oder mehreren der Ansprüche 1 bis 4, dadurch gekennzeichnet, daß die Bestrahlung mit einer Intensität von 10 bis 1000 mW/cm$^2$ durchgeführt wird.

6. Verfahren nach einem oder mehreren der Ansprüche 1 bis 5, dadurch gekennzeichnet, daß ein elektrisches Feld einer Stärke von 1 bis 100 V/$\mu$m angelegt wird.

7. Verfahren zur Herstellung einer strukturierten Probe mit großer, stabiler, reversibler Suszeptibilität $\chi^{(2)}$, enthaltend ein Material mit flüssigkristalliner Matrix und einem Glaspunkt oberhalb der Raumtemperatur, welches mindestens eine durch geeignetes Licht anregbare chromophore Gruppe besitzt, die durch photophysikalische Vorgänge eine Umorientierung der flüssigkristallinen Matrix in eine homöotrope Textur ermöglicht sowie mindestens eine chromophore Gruppe mit einer hohen molekularen Hyperpolarisierbarkeit besitzt, wobei diese Probe unterhalb der Glastemperatur der Materialien mit flüssigkristalliner Matrix gleichzeitig einem elektrischen Feld und einer ortsabhängigen Bestrahlung durch unpolarisiertes und/oder zirkular polarisiertes Licht ausgesetzt wird.

8. Verfahren gemäß Anspruch 7 zur Herstellung von optischen Schaltelementen oder von strukturierten Wellenleitern.

**Claims**

1. Process for the production of a material having large, stable, reversible susceptibility, in which a material having a liquid-crystalline matrix and a glass transition temperature above room temperature and containing at least one chromophoric group which can be excited by suitable light and enables, through photophysical processes, realignment of the liquid-crystalline matrix to give a homeotropic structure, and containing at least one chromophoric group of high molecolar hyperpolarizability is subjected, at below its glass transition temperature, simultaneously to an electric field and unpolarized and/or circular-polarized light.

2. Process according to Claim 1, characterized in that the materials having a liquid-crystalline matrix are cyclic polysiloxanes.

3. Process according to Claim 2, characterized in that the materials having a liquid-crystalline matrix are cyclic polysiloxanes having cholesteric properties.

4. Process according to one or more of Claims 1 to 3, characterized in that the materials having a liquid-crystalline matrix are cyclic polysiloxanes containing 4-amino-4′-nitroazobenzene or 4-amino-4′-cyanoazobenzene as nonlinear-optical groups.

5. Process according to one or more of Claims 1 to 4, characterized in that the irradiation is carried out at an intensity of from 10 to 1000 mW/cm$^2$.

6. Process according to one or more of Claims 1 to 5, characterized in that an electric field having a strength of from 1 to 100 V/$\mu$m is applied.

7. Process for the production of a structured sample having large, stable, reversible susceptibility, containing a material having a liquid-crystalline matrix and a glass transition temperature above room temperature and containing at least one chromophoric group which can be excited by suitable light and enables, through photophysical processes, realignment of the liquid-crystalline matrix to give a homeotropic structure, and containing at least one chromophoric group of high molecolar hyperpolarizability, where this sample is subjected, at below the glass transition temperature of the materials having a liquid-crystalline matrix, simultaneously to an electric field and to location-dependent irradiation by unpolarized and/or circular-polarized light.

8. Process according to Claim 7 for the production of optical switching elements or structured waveguides.

**Revendications**

1. Procédé de fabrication d'un matériau ayant une susceptibilité $\chi^{(2)}$ réversible, stable, élevée, un matériau à matrice à cristaux liquides et à point de transition vitreuse au-dessus de la température ambiante, qui possède au moins un groupement chromophore excitable par de la lumière appropriée, qui rend possible, grâce à des processus photo-physiques, une réorientation de la matrice à cristaux liquides en une texture homéotrope, ainsi qu'un groupement chromophore ayant une capacité d'hyperpolarisation moléculaire élevée, étant soumis en dessous de sa température de transition vitreuse simultanément à un champ électrique et à de la lumière non polarisée et/ou à de la lumière à polarisation circulaire.

2. Procédé selon la revendication 1, caractérisé en ce que l'on utilise en tant que matériaux à matrice à cristaux liquides des polysiloxanes cycliques.

3. Procédé selon la revendication 2, caractérisé en ce que l'on utilise en tant que matériaux à matrice à cristaux liquides des polysiloxanes cycliques à propriétés cholestériques.

4. Procédé selon l'une quelconque des revendications 1 à 3, caractérisé en ce que l'on utilise en tant que matériaux à matrice à cristaux liquides des polysiloxanes cycliques, qui contiennent, en tant que groupements optiques non linéaires, du 4-amino-4′-nitroazobenzène ou du 4-amino-4′-cyanoazobenzène.

5. Procédé selon l'une quelconque des revendications 1 à 4, caractérisé en ce que l'on effectue l'irradiation avec une intensité de 10 à 1 000 mW/cm$^2$.

6. Procédé selon l'une quelconque des revendications 1 à 5, caractérisé en ce que l'on applique un champ électrique d'une grandeur de 1 à 100 V/$\mu$m.

7. Procédé de fabrication d'un échantillon structuré ayant une susceptibilité $\chi^{(2)}$ réversible, stable, élevée, contenant un matériau à matrice à cristaux liquides et à point de transition vitreuse au-dessus de la température ambiante, qui possède au moins un groupement chromophore excitable par de la lumière appropriée, qui rend possible, grâce à des processus photophysiques, une réorientation de la matrice à cristaux liquides en une texture homéotrope, ainsi qu'un groupement chromophore ayant une capacité d'hyperpolarisation moléculaire élevée, cet échantillon étant soumis, en dessous de la température de transition vitreuse des matériaux à matrice à cristaux liquides, simultanément à un champ électrique et à une irradiation dépendante de l'endroit à l'aide de lumière non polarisée et/ou de lumière à polarisation circulaire.

8. Procédé conformément à la revendication 7 de fabrication d'éléments de commutation optiques ou de guides d'ondes structurés.

**Fig. 1**

Y-axis: INTENSITÄT [w.E.]

X-axis: EINFALLSWINKEL [°]

Curves labeled: I, II, III

EP 0 615 152 B1

Fig. 2